# EUROPÄISCHE PATENTSCHRIFT

(11) **EP 2 315 783 B1**
(45) Veröffentlichungstag und Bekanntmachung des Hinweises auf die Patenterteilung: **16.04.2014**
(21) Anmeldenummer: 09779807.8
(22) Anmeldetag: 17.06.2009
(51) Int. Cl.: C08C 3/00, C08J 3/12

(54) **VERFAHREN ZUR MODIFIKATION VON NATURKAUTSCHUK UND MODIFIZIERTER NATURKAUTSCHUK**
METHOD FOR MODIFYING NATURAL RUBBER, AND MODIFIED NATURAL RUBBER
PROCÉDÉ DE MODIFICATION DE CAOUTCHOUC NATUREL ET CAOUTCHOUC NATUREL MODIFIÉ

(30) Priorität: 16.08.2008 DE 102008038000
(43) Veröffentlichungstag der Anmeldung: 04.05.2011
(73) Patentinhaber: Continental Reifen Deutschland GmbH, 30165 Hannover (DE)
(72) Erfinder: STOLLBERG, Sandra, 31553 Auhagen (DE); WEINREICH, Hajo, 31552 Apelern (DE)
(74) Vertreter: Finger, Karsten
(86) Internationale Anmeldenummer: PCT/EP2009/057500
(87) Internationale Veröffentlichungsnummer: WO 2010/020448

(56) Entgegenhaltungen:
- EP-A1- 0 950 485
- GB-A- 741 049
- GB-A- 971 390
- GB-A- 1 392 287

## Beschreibung

Die Erfindung betrifft ein Verfahren zur Modifikation von handelsüblichem Naturkautschuk und modifizierten Naturkautschuk mit verbessertem Verarbeitungsverhalten.

Naturkautschuk (NR) wird aus dem weißen Milchsaft (Latexmilch) bestimmter Pflanzen gewonnen, die in der tropischen Klimazone anzutreffen sind. Aus dieser Latexmilch wird durch Koagulation der im Handel erhältliche Naturkautschuk gewonnen werden, der in der kautschukverarbeitenden Industrie in großen Mengen vielfältige Anwendung findet. So wurden bspw. im Jahr 2005 8.703.000 t Naturkautschuk produziert und 8.777.000 t Naturkautschuk verbraucht, wovon ca. 70% des Verbrauchs im Autoreifensektor angesiedelt ist [Quelle: Römpp, Chemielexikon online, Version 3.1].

Die physikalischen und chemischen Eigenschaften der unterschiedlichen Naturkautschuktypen sind durch deren jeweiligen Herkunftsgebiete und Verarbeitungen bzw. Herstellungen bestimmt.

Ein wesentliches Kriterium diesbezüglich ist das Herstellungsverfahren des Naturkautschuklatex. Dadurch lassen sich die Naturkautschuktypen in zwei Klassen, eine erste Klasse 1 und eine zweite Klasse 2, einteilen.

### Klasse 1:

Die Kautschuktypen der Klasse 1 werden durch das konventionelle Verfahren, bei dem die aus Latex gewonnen Koagulatfelle direkt ohne Zerkleinerung weiterverarbeitet werden, hergestellt. Der Naturkautschuk der Klasse 1 unterliegt im Herstellungsprozeß daher keiner mechanischen Belastung und wird meist bei Temperaturen kleiner 70°C getrocknet. Dadurch behält er ein relativ hohes Molekulargewicht, welches deutliche Vorteile im dynamischen Verhalten der diesen Naturkautschuk enthaltenden Vulkanisate aufweist. Ein wesentlicher Nachteil ist allerdings die handelsübliche Abpackungsform als so genannte "sheets", welche auch als Felle bzw. Kautschukfelle bezeichnet werden und welche die Prozessierbarkeit deutlich erschweren. Zur Klasse 1 gehören u.a. "Ribbed Smoked Sheets" (RSS), "Air Dried Sheets" (ADS), "UnSmoked Sheets" (USS) und "Pale Crepe".

### Klasse 2:

Der Naturkautschuk der Klasse 2 wird das so genannte "Crumb-Verfahren" hergestellt, wobei der Kautschuk mittels Walzen unter Zusatz von Rizinusöl oder durch mechanische Zerkleinerung in Granulatoren zu Krumen aufgebrochen wird. Die nach diversen Waschprozessen erfolgende Trocknung findet bei Temperaturen bis 130°C statt. Durch den mechanischen Prozess ergeben sich geringere Molekulargewichte, welche sich auf das dynamische Verhalten der entsprechenden Vulkanisate negativ auswirkt. Die Abpackung des Naturkautschuks der Klasse 2 erfolgt allerdings in verarbeitungsfreundlichen Ballen, welche eine deutlich verbesserte Prozessierbarkeit gewährleisten. Zur Klasse 2 gehören u.a. "Standard Thai Rubber" (STR), "Standard Malaysian Rubber" (SMR) und "Standard Indonesian Rubber" (SIR).

Es wurden vielfach Versuche unternommen die Eigenschaften des Naturkautschuks entsprechend den jeweils gewünschten Kriterien zu beeinflussen. Stellvertretend für weitere Druckschriften diesbezüglich sind hier zu erwähnen:
(D1) EP 0 950 485 A1
(D2) DE 199 13 057 B4
(D3) EP 1 120 429 A1

Aus der D1 ist ein Verfahren zur Herstellung von Naturkautschuk und damit erhaltener Naturkautschuk bekannt. Hier wird vor oder nach einer ein- oder mehrstufigen Trocknungsbehandlung des Naturkautschuks ein Viskositätsstabilisator hinzugefügt. Die in der D1 beschriebenen herkömmlichen Probleme der Trocknungsbedingungen sollen verbessert werden, um einen Naturkautschuk zu erhalten, der ein hohes Molekulargewicht und einen niedrigen Gelgehalt aufweist.

Durch die Trocknungsbehandlung ergeben sich eine Gelinenge des Naturkautschuks von 10% oder weniger und eine Molekulargewichts-Retention von 85% oder mehr.

D2 beschreibt ein Verfahren zur Mastikation von Naturkautschuk in einem stempellosen Innenmischer. Bei der Mastikation von Naturkautschuk geht es darum, ein Aufspalten der langen Kohlenwasserstoffketten im Kautschuk durchzuführen, um die Härte des Kautschuks herabzusetzen bzw. diesen leichter verformbar zu machen.

In der D3 wird ein Verfahren zur Herstellung von Naturkautschuk für druckempfindliche Adhesive offenbart. Hierzu wird das Molekulargewicht eines nicht-mastizierten Naturkautschuks durch Verwendung eines "peptizers" reduziert, während der nichtmastizierte Naturkautschuk in einem organischen Lösungsmittel gelöst wird.

Der Erfindung liegt daher die Aufgabe zugrunde, ein Verfahren zur Modifizierung von handelsüblichem Naturkautschuk bereitzustellen, wodurch sich eine verbesserte Prozessierbarkeit des daraus erhaltenen Naturkautschuks in Kombination mit verbesserten dynamischen Eigenschaften der Vulkanisate, welche den so erhaltenen Naturkautschuk enthalten, gewährleisten lässt.

Gelöst wird diese Aufgabe durch ein Verfahren zur Modifikation von handelsüblichem Naturkautschuk, gekennzeichnet durch wenigstens folgende Verfahrensschritte:
- Zerkleinern des Naturkautschuks in einem ersten Verfahrensschritt;
- Verblenden und Reinigen des Naturkautschuks in einem zweiten Verfahrensschritt;
- Weiteres Zerkleinern des Naturkautschuks in einem dritten Verfahrensschritt;
- Trocknung des Naturkautschuks in einem vierten Verfahrensschritt,
wobei der Naturkautschuk vor der Modifikation ein Naturkautschuk ist, der durch ein Verfahren, bei dem die aus Latex gewonnen Koagulatfelle direkt ohne Zerkleinerung weiterverarbeitet werden, hergestellt ist und als Sheets vorliegt.

Überraschenderweise wurde gefunden, dass nur durch diese Verfahrensschritte, welche in der angegebenen chronologischen Reihenfolge erfolgen müssen, sich der Naturkautschuk derart modifizieren lässt, dass er eine bessere Prozessierbarkeit bei gleichzeitigen guten dynamischen Eigenschaften der Vulkanisate gewährleisten kann.

Der verwendete Naturkautschuk ist ein Latexkautschuk-Typ, der durch Säurekoagulation aus Latex hergestellt wird und handelsüblich erworben werden kann. Erfindungswesentlich ist hierbei, dass der Naturkautschuk vor der Modifikation durch ein konventionelles Verfahren, bei dem die aus Latex gewonnen Koagulatfelle direkt ohne Zerkleinerung weiterverarbeitet werden, hergestellt wurde und als Sheets vorliegt. Bevorzugt handelt es sich um einen ungeräucherten Naturkautschuk des Typs USS, wobei auch der Einsatz eines Naturkautschuks des Typs ADS oder eine Kombination aus beiden Typen möglich ist.

Der Naturkautschuk hat vor der Modifikation und auch nach der Modifikation ein Molekulargewicht, ermittelt durch Gel-Permeations-Chromatografie (GPC), von größer oder gleich 1.000.000 g/mol, bevorzugt von größer oder gleich 1.200.000 g/mol und ganz besonders bevorzugt von größer oder gleich 1.500.000 g/mol.

Das Zerkleinern des Naturkautschuks nach dem ersten Verfahrensschritt findet in einem Zeitraum von 1 bis 10 min statt und erfolgt in einer Hammermühle (engl. hammer mill) und / oder in einem Schredder. Der Naturkautschuk wird hierbei zu Partikeln mit einer mittleren durchschnittlichen Partikelgröße von größer 1cm bis kleiner oder gleich 15cm, bevorzugt größer oder gleich 1cm bis kleiner oder gleich 10cm, zerkleinert.
Der erste Verfahrenschritt dient zum Vorbereiten des Naturkautschuks, insbesondere um eine größere Oberfläche für den zweiten Verfahrensschritt zu erhalten und um bereits größere Schmutzpartikel zu entfernen. Des Weiteren werden bei Verwendung unterschiedlicher Naturkautschuktypen diese bereits sozusagen vorverblendet.

Das Verblenden und Reinigen des Naturkautschuks nach dem zweiten Verfahrensschritt erfolgt in einem Rührtank mit Hilfe einer Flüssigkeit, wobei es sich hier bevorzugt um Wasser handelt. Der zweite Verfahrensschritt findet in einem Zeitraum von 1 bis 15min statt. Anzumerken ist hierbei, dass es sich bei dem zweiten Verfahrensschritt um einen kontinuierlichen Prozess handelt, bei dem sich jeweils Verblenden und Reinigen in nicht bestimmbaren Zeiträumen abwechseln. Der Zeitraum von 1 bis 15min bezieht sich daher auf die Gesamtdauer des zweiten Verfahrensschrittes, nicht auf die einzelne Dauer des Verblendens oder die einzelne Dauer des Reinigens.
Der zweite Verfahrensschritt dient bevorzugt der Minimierung der Schwankungen der verwendeten Naturkautschuktypen, des Weiteren zum weiteren blenden und reinigen, d.h. zum Entfernen des noch Vorhandenen Schmutzes.

Das Zerkleinern des Naturkautschuks nach dem dritten Verfahrensschritt findet in einer Hammermühle und / oder in einem Schredder und / oder mittels einer Walze statt. Der Naturkautschuk wird zu Partikeln mit einer mittleren durchschnittlichen Partikelgröße von kleiner oder gleich 10mm, bevorzugt kleiner oder gleich 8mm, zerkleinert.
Der dritte Verfahrensschritt dient zum weiteren Vergrößern der Oberfläche, wodurch ein nochmals verbessertes Verblenden und eine weitere Reinigung gewährleistet werden. Des Weiteren wird dadurch eine gute Luftdurchlässigkeit für den anschließenden Trocknungsschritt geschaffen.

Die Trocknung des Naturkautschuks nach dem vierten Verfahrensschritt findet in einem gasförmigen Medium statt, wobei es sich bei dem gasförmigen Medium bevorzugt um Luft handelt. Es sind aber auch andere Gase, wie beispielsweise Stickstoff, geeignet. Die Trocknung findet bei Temperaturen zwischen 90 und 120 °C, bevorzugt zwischen 100 und 118°C und besonders bevorzugt bei Temperaturen zwischen 105 und 115°C, statt.
Der vierte Verfahrensschritt dient dem Entfernen der Restfeuchtigkeit der verwendeten Naturkautschuktypen durch vergleichsweise schonende Trocknung bei vergleichsweise niedriger Temperatur.

Der Erfindung liegt weiterhin die Aufgabe zugrunde, einen modifizierten Naturkautschuk bereitzustellen, der sich durch ein vergleichsweise hohes Molekulargewicht und durch eine gute Prozessierbarkeit auszeichnet.

Gelöst wird diese Aufgabe dadurch, dass der Naturkautschuk durch wenigstens vier Verfahrensschritte modifiziert ist.

Dabei handelt es sich bei den Verfahrensschritten wenigstens um Zerkleinern des Naturkautschuks als einen ersten Verfahrensschritt, Verblenden und Reinigen des Naturkautschuks als einen zweiten Verfahrensschritt, weiteres Zerkleinern des verblendeten und gereinigten Naturkautschuks als einen dritten Verfahrensschritt und Trocknung des Naturkautschuks als einen vierten Verfahrensschritt.
Bei dem Naturkautschuk handelt es sich um einen Latexkautschuk-Typ, der durch Säurekoagulation des Latex gebildet ist und vor der Modifikation handelsüblich erwerbar ist.
Erfindungswesentlich ist, dass der Naturkautschuk vor der Modifikation durch ein konventionelles Verfahren, bei dem die aus Latex gewonnen Koagulatfelle direkt ohne Zerkleinerung weiterverarbeitet werden, hergestellt wurde und als Sheets vorliegt.

Der modifizierte Naturkautschuk hat vor der Modifikation und nach der Modifikation ein Molekulargewicht, ermittelt durch Gel-Permeations-Chromatografie (GPC), von größer oder gleich 1.000.000 g/mol, bevorzugt von größer oder gleich 1.200.000 g/mol und ganz besonders bevorzugt von größer oder gleich 1.500.000 g/mol.

Der modifizierte Naturkautschuk ist im Rahmen des ersten Verfahrensschritts in einem Zeitraum von 1 bis 10 min zerkleinert, wobei das Zerkleinern in einer Hammermühle (engl. hammer mill) und / oder in einem Schredder erfolgt. Der modifizierte Naturkautschuk wird im Rahmen des ersten Verfahrensschritts hierbei zu Partikeln mit einer mittleren durchschnittlichen Partikelgröße von größer 1cm bis kleiner oder gleich 15 cm, bevorzugt größer oder gleich 1 cm bis kleiner oder gleich 10 cm, zerkleinert.

Der modifizierte Naturkautschuk ist im Rahmen des zweiten Verfahrensschritts in einem Rührtank mit Hilfe einer Flüssigkeit, wobei es sich hier bevorzugt um Wasser handelt, verblendet und gereinigt. Der modifizierte Naturkautschuk wird im Rahmen des zweiten Verfahrensschritts in einem Zeitraum von 1 bis 15min verblendet und gereinigt. Anzumerken ist hierbei, dass es sich bei dem zweiten Verfahrensschritt um einen kontinuierlichen Prozess handelt, bei dem sich jeweils Verblenden und Reinigen in nicht bestimmbaren Zeiträumen abwechseln. Der Zeitraum von 1 bis 15min bezieht sich daher auf die Gesamtdauer des zweiten Verfahrensschrittes, nicht auf die einzelne Dauer des Verblendens oder die einzelne Dauer des Reinigens.

Der modifizierte Naturkautschuk ist im Rahmen des dritten Verfahrensschritts weiter zerkleinert. Das weitere Zerkleinern im Rahmen des dritten Verfahrensschritts findet in einer Hammermühle und / oder in einem Schredder und / oder mittels einer Walze statt. Der modifizierte Naturkautschuk ist im Rahmen des dritten Verfahrensschritts zu Partikeln mit einer mittleren durchschnittlichen Partikelgröße von kleiner oder gleich 10mm, bevorzugt kleiner oder gleich 8mm, zerkleinert.

Der modifizierte Naturkautschuk ist im Rahmen des vierten Verfahrensschritts in einem gasförmigen Medium getrocknet, wobei es sich bei dem gasförmigen Medium bevorzugt um Luft handelt. Es sind aber auch andere Gase, wie beispielsweise Stickstoff, geeignet. Der modifizierte Naturkautschuk ist im Rahmen des vierten Verfahrensschritts bei Temperaturen zwischen 90 und 120 °C, bevorzugt zwischen 100 und 118°C und besonders bevorzugt bei Temperaturen zwischen 105 und 115°C, getrocknet.

Des Weiteren wird eine Kautschukmischung bereitgestellt, die einen modifizierten Naturkautschuk gemäß Kennzeichen des Anspruchs 25 und der hierauf bezogenen Ansprüche enthält.

Der Erfindung liegt weiterhin die Aufgabe zu Grunde, obig beschriebenen modifizierten Naturkautschuk, zur Herstellung von Reifen, insbesondere zur Herstellung des Laufstreifens eines Reifens und / oder einer Body-Mischung eines Reifens und zur Herstellung von Riemen und Gurten zu verwenden.

Die Erfindung soll nun anhand von Vergleichs- und Ausführungsbeispielen, die in Tabellen 1 und 2 zusammengefasst sind, näher erläutert werden. Die mit "E" gekennzeichnete Kautschukmischung enthält hierbei den erfindungsgemäßen modifizierten Naturkautschuk, während es sich bei den mit "V" gekennzeichneten Kautschukmischungen um Vergleichsmischungen handelt.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte bei Raumtemperatur gemäß DIN 53 505
- Rückprallelastizität bei 70°C gemäß DIN 53 512
- Spannungswert bei 300% Dehnung bei Raumtemperatur gemäß DIN 53 504
- Relativer Vernetzungsgrad von 5% (t5, Anvulkanisationszeit) und 90% (t90, Ausvulkanisationszeit) mittels rotorlosem Vulkameter (MDR = Moving Disc Rheometer) gemäß DIN 53 529
- Zugfestigkeit bei Raumtemperatur gemäß DIN 53 504
- Reißdehnung bei Raumtemperatur gemäß DIN 53 504
- Normierter Index 1: Zugfestigkeit multipliziert mit Reißdehnung, anschließend Normierung auf V1
- Normierter Index 2: Zugfestigkeit multipliziert mit Reißdehnung und multipliziert mit dem Spannungswert 300%, anschließend auf V1 normiert

**Tabelle 1**

| **Bestandteile** | **Einheit** | **V1** | **V2** | **V3** | **V4** | **E1** |
|---|---|---|---|---|---|---|
| RSS 3 STA-TG | phr | 100 | -- | -- | -- | -- |
| STR 20 BD | phr | -- | 100 | -- | -- | -- |
| SMR 10 CE | phr | -- | -- | 100 | -- | -- |
| SIR 20 SED | phr | -- | -- | -- | 100 | -- |
| Modifizierter NR ^{a} | phr | -- | -- | -- | -- | 100 |
| Ruß, N121 | phr | 48,5 | 48,5 | 48,5 | 48,5 | 48,5 |
| DTPD | phr | 1 | 1 | 1 | 1 | 1 |
| 6PPD | phr | 1,5 | 1,5 | 1,5 | 1,5 | 1,5 |
| Ozonschutzwachs | phr | 2,5 | 2,5 | 2,5 | 2,5 | 2,5 |
| Stearinsäure | phr | 3 | 3 | 3 | 3 | 3 |
| Zinkoxid | phr | 2 | 2 | 2 | 2 | 2 |
| TBBS, Schwefel | phr | 2,65 | 2,65 | 2,65 | 2,65 | 2,65 |

| | | | | | | |
|---|---|---|---|---|---|---|
| ^{a} TSS 8, erfindungsgemäß modifiziert | | | | | | |

**Tabelle 2**

| **Eigenschaften** | **Einheit** | **V1** | **V2** | **V3** | **V4** | **E1** |
|---|---|---|---|---|---|---|
| Anvulkanisationszeit t5 | min | 1,61 | 1,22 | 1,47 | 1,25 | 1,47 |
| Ausvulkanisationszeit t90 | min | 10,99 | >15 | 11,71 | 10,32 | >15 |
| Härte bei RT | Shore A | 65 | 66 | 64 | 65 | 65 |
| Rückprall bei RT | % | 59,9 | 57,2 | 59,7 | 58,3 | 59,8 |
| Zugfestigkeit | MPa | 25,4 | 24,5 | 22 | 24,5 | 25,5 |
| Reißdehnung | % | 472 | 468 | 429 | 474 | 478,5 |
| Normierter Index 1 | % | 100 | 96 | 79 | 97 | 102 |
| Spannungswert 300% | MPa | 15,81 | 15,73 | 15,37 | 15,23 | 15,57 |
| Normierter Index 2 | % | 100 | 95 | 77 | 93 | 100 |
| Abpackungsform des NR | | Sheets | Ballen | Ballen | Ballen | Ballen |
| Einarbeitbarkeit von Füllstoffen | | schwer | leicht | leicht | leicht | leicht |
| Schwankungen der Mooney-Viskositäten des unmastizierten NR | Punkte | ± 20 | ± 10 | ± 10 | ± 10 | ± 5 |
| Molekulargewicht des NR (ermittelt mit GPC) | g/mol | 1600000 | 900000 | 900000 | 900000 | 1600000 |

Aus der Tabelle 2 ist ersichtlich, dass der modifizierte Naturkautschuk (siehe E1) durch die Abpackungsform in Form von Ballen eine verbesserte Prozessierbarkeit aufweist. Gleichzeitig zeigt er ein Einarbeitungsverhalten von Füllstoffen, wie Z.B. Kieselsäure und / oder Ruß, dass dem von V2, V3 und V4 äquivalent und somit deutlich besser als das von V1 ist. Die herstellungsbedingten Viskositätschwankungen der Mooney-Viskositäten des erfindungsgemäßen Naturkautschuks, wie er in E1 zu finden ist, sind deutlich geringer als die des Naturkautschuks von V1. Dies führt im industriellen Prozess zu einer deutlichen Prozesssicherheit, zu einer so genannten verbesserten "Batch-zuBatch"-Produktion. Gleichzeitig zeigt die Kautschukmischung, die den erfindungsgemäßen modifizierten Naturkautschuk enthält, bedingt durch das vergleichsweise hohe Molekulargewicht von 1600000 g/mol, physikalische Eigenschaften auf, die sich auf einem ähnlichen Niveau wie die der Mischung V1, befinden. Der Naturkautschuk der Mischung V1 hat ein vergleichbares Molekulargewicht, liegt aber in der prozessungünstigeren Form von Sheets vor. Die Naturkautschuke der Mischungen V2, V3 und V4 liegen zwar in der prozessgünstigeren Ballenform vor, haben allerdings aufgrund ihrer deutlich geringeren Molekulargewichte schlechtere physikalische Eigenschaften.
Überraschenderweise wurde festgestellt, dass der modifizierte Naturkautschuk hinsichtlich der Vernetzungscharakteristik und der Mischungseigenschaften keinen Kompromiss der Naturkautschuke der Klasse 1 (siehe V1) und der Naturkautschuke der Klasse 2 (siehe V2 bis V4) darstellt, sondern eine Verbesserung aufweist.
Hier seien als relevante Daten folgende genannt:
- zur Verbesserung der Anvulkanisation sollte t5 möglichst lang sein;
- bezüglich der Reversionsanfälligkeit sollte t90 möglichst lang sein;
- die Härte bei Raumtemperatur sollte vergleichbar sein;
- der Rückprall bei 70°C sollte als Rollwiderstandsindikator möglichst hoch sein;
- die ultimativen Mischungseigenschaften, dargestellt durch den normierten Index 1 und den normierten Index 2, sollten deutlich über 100% sein.
Bei Betrachtung der Tabelle 2 zeigt sich, dass der erfindungsgemäße modifizierte Naturkautschuk, wie er in der Kautschukmischung E2 eingesetzt wurde, die erwähnten Angaben aufweist.

## Patentansprüche

1. Verfahren zur Modifikation von handelsüblichem Naturkautschuk, **gekennzeichnet durch** wenigstens folgende Verfahrensschritte:
- Zerkleinern des Naturkautschuks in einem ersten Verfahrensschritt;
- Verblenden und Reinigen des Naturkautschuks in einem zweiten Verfahrensschritt;
- Weiteres Zerkleinern des Naturkautschuks in einem dritten Verfahrensschritt;
- Trocknung des Naturkautschuks in einem vierten Verfahrensschritt,
wobei der Naturkautschuk vor der Modifikation ein Naturkautschuk ist, der **durch** ein Verfahren, bei dem die aus Latex gewonnen Koagulatfelle direkt ohne Zerkleinerung weiterverarbeitet werden, hergestellt ist und als Sheets vorliegt.

2. Verfahren nach Anspruch 1, **dadurch gekennzeichnet, dass** der Naturkautschuk ein Latexkautschuk-Typ ist, der durch Säurekoagulation des Latex hergestellt ist.

3. Verfahren nach einem der Ansprüche 1 bis 2, **dadurch gekennzeichnet, dass** der Naturkautschuk vor der Modifikation ein Molekulargewicht größer oder gleich 1.000.000 g/mol hat.

4. Verfahren nach einem der Ansprüche 1 bis 3, **dadurch gekennzeichnet, dass** der Naturkautschuk nach der Modifikation ein Molekulargewicht größer oder gleich 1.000.000 g/mol hat.

5. Verfahren nach einem der Ansprüche 1 bis 4, **dadurch gekennzeichnet, dass** das Zerkleinern des Naturkautschuks nach dem ersten Verfahrensschritt in einer Hammermühle und / oder in einem Schredder stattfindet.

6. Verfahren nach einem der Ansprüche 1 bis 5, **dadurch gekennzeichnet, dass** der Naturkautschuk nach dem zweiten Verfahrensschritt in einem Rührtank mit Hilfe einer Flüssigkeit verblendet und gereinigt wird.

7. Verfahren nach einem der Ansprüche 1 bis 6, **dadurch gekennzeichnet, dass** das weitere Zerkleinern des Naturkautschuks nach dem dritten Verfahrensschritt in einer Hammermühle und / oder in einem Schredder und / oder mittels einer Walze stattfindet.

8. Verfahren nach einem der Ansprüche 1 bis 7, **dadurch gekennzeichnet, dass** die Trocknung des Naturkautschuks nach dem vierten Verfahrensschritt in einem gasförmigen Medium stattfindet.

9. Modifizierter Naturkautschuk, **dadurch gekennzeichnet, dass** der handelsübliche Naturkautschuk durch wenigstens vier mechanische Verfahrensschritte modifiziert ist, wobei es sich bei den Verfahrensschritten wenigstens um Zerkleinern des Naturkautschuks als einen ersten Verfahrensschritt, Verblenden und Reinigen des Näturkautschuks als einen zweiten Verfahrensschritt, weiteres Zerkleinern des verblendeten und gereinigten Naturkautschuks als einen dritten Verfahrensschritt und Trocknung des Naturkautschuks als einen vierten Verfahrensschritt handelt, wobei der Naturkautschuk vor der Modifikation durch ein Verfahren, bei dem die aus Latex gewonnenen Koagulatfelle direkt ohne Zerkleinerung weiterverarbeitet werden, hergestellt wurde und als Sheets vorliegt.

10. Modifizierter Naturkautschuk nach Anspruch 9, **dadurch gekennzeichnet, dass** der Naturkautschuk vor der Modifikation ein Molekulargewicht größer oder gleich 1.000.000 g/mol hat.

11. Modifizierter Naturkautschuk nach einem der Ansprüche 9 bis 10, **dadurch gekennzeichnet, dass** der Naturkautschuk nach der Modifikation ein Molekulargewicht größer oder gleich 1.000.000 g/mol hat.

12. Modifizierter Naturkautschuk nach einem der Ansprüche 9 bis 11, **dadurch gekennzeichnet, dass** er im Rahmen des Modifikationsprozess nach dem ersten Verfahrensschritt in einer Hammermühle und / oder in einem Schredder zerkleinert ist.

13. Modifizierter Naturkautschuk nach einem der Ansprüche 9 bis 12, **dadurch gekennzeichnet, dass** der Naturkautschuk im Rahmen des Modifikationsprozess nach dem zweiten Verfahrensschritt in einem Rührtank mit Hilfe einer Flüssigkeit verblendet und gereinigt ist.

14. Modifizierter Naturkautschuk nach einem der Ansprüche 9 bis 13, **dadurch gekennzeichnet, dass** er im Rahmen des Modifikationsprozess nach dem dritten Verfahrensschritt in einer Hammermühle und / oder in einem Schredder und / oder mittels einer Walze weiter zerkleinert ist.

15. Modifizierter Naturkautschuk nach einem der Ansprüche 9 bis 14, **dadurch gekennzeichnet, dass** der Naturkautschuks im Rahmen des Modifikationsprozess nach dem vierten Verfahrensschritt in einem gasförmigen Medium getrocknet ist.

16. Kautschukmischung, **dadurch gekennzeichnet, dass** sie einen modifizierten Naturkautschuk gemäß Anspruch 9 und den darauf bezogenen Ansprüchen enthält.

17. Verwendung eines modifizierten Naturkautschuks nach einem der Ansprüche 9 bis 15 zur Herstellung eines Reifens, Gurtes oder Riemens.

## Claims

1. Process for modifying commercially available natural rubber, **characterized by** at least the following process steps:
- comminuting the natural rubber in a first process step;
- blending and purifying the natural rubber in a second process step;
- further comminuting the natural rubber in a third process step;
- drying the natural rubber in a fourth process step, the natural rubber prior to the modification being a natural rubber which is produced by a process in which the coagulum slabs obtained from latex are processed further directly without comminution, and is present in the form of sheets.

2. Process according to Claim 1, **characterized in that** the natural rubber is a latex rubber type produced by acid coagulation of the latex.

3. Process according to either of Claims 1 and 2, **characterized in that** the natural rubber prior to the modification has a molecular weight greater than or equal to 1 000 000 g/mol.

4. Process according to any of Claims 1 to 3, **characterized in that** the natural rubber after the modification has a molecular weight greater than or equal to 1 000 000 g/mol.

5. Process according to any of Claims 1 to 4, **characterized in that** the comminution of the natural rubber in the first process step takes place in a hammer mill and/or in a shredder.

6. Process according to any of Claims 1 to 5, **characterized in that** the natural rubber is blended and purified in the second process step in a stirred tank with the aid of a liquid.

7. Process according to any of Claims 1 to 6, **characterized in that** the further comminution of the natural rubber in the third process step takes place in a hammer mill and/or in a shredder and/or by means of a roller.

8. Process according to any of Claims 1 to 7, **characterized in that** the drying of the natural rubber in the fourth process step takes place in a gaseous medium.

9. Modified natural rubber, **characterized in that** the commercially available natural rubber is modified by at least four mechanical process steps, the process steps comprising at least comminution of the natural rubber as a first process step, blending and purification of the natural rubber as a second process step, further comminution of the blended and purified natural rubber as a third process step and drying of the natural rubber as a fourth process step, the natural rubber prior to the modification having been produced by a process in which the coagulum slabs obtained from latex are processed further directly without comminution, and being present in the form of sheets.

10. Modified natural rubber according to Claim 9, **characterized in that** the natural rubber prior to the modification has a molecular weight greater than or equal to 1 000 000 g/mol.

11. Modified natural rubber according to either of Claims 9 and 10, **characterized in that** the natural rubber after the modification has a molecular weight greater than or equal to 1 000 000 g/mol.

12. Modified natural rubber according to any of Claims 9 to 11, **characterized in that**, in the course of the modification process, it is comminuted in the first process step in a hammer mill and/or in a shredder.

13. Modified natural rubber according to any of Claims 9 to 12, **characterized in that** the natural rubber, in the course of the modification process, is blended and purified in the second process step in a stirred tank with the aid of a liquid.

14. Modified natural rubber according to any of Claims 9 to 13, **characterized in that**, in the course of the modification process, it is further comminuted in the third process step in a hammer mill and/or in a shredder and/or by means of a roller.

15. Modified natural rubber according to any of Claims 9 to 14, **characterized in that** the natural rubber, in the course of the modification process, is dried in the fourth process step in a gaseous medium.

16. Rubber mixture, **characterized in that** it comprises a modified natural rubber according to Claim 9 and the claims dependent thereon.

17. Use of a modified natural rubber according to any of Claims 9 to 15 for producing a tyre, belt or drive belt.

## Revendications

1. Procédé pour la modification de caoutchouc naturel usuel du commerce, **caractérisé par** au moins les étapes de procédé suivantes :
- déchiquetage du caoutchouc naturel dans une première étape de procédé ;
- mélange et nettoyage du caoutchouc naturel dans une deuxième étape de procédé ;
- nouveau déchiquetage du caoutchouc naturel dans une troisième étape de procédé ;
- séchage du caoutchouc naturel dans une quatrième étape de procédé,
le caoutchouc naturel étant, avant la modification, un caoutchouc naturel qui a été préparé par un procédé dans lequel les balles de coagulum obtenues à partir de latex sont transformées directement sans déchiquetage et qui se trouve sous forme de feuilles.

2. Procédé selon la revendication 1, **caractérisé en ce que** le caoutchouc naturel est un type de caoutchouc de latex, qui a été préparé par coagulation acide du latex.

3. Procédé selon l'une quelconque des revendications 1 à 2, **caractérisé en ce que** le caoutchouc naturel présente, avant la modification, un poids moléculaire supérieur ou égal à 1 000 000 g/mole.

4. Procédé selon l'une quelconque des revendications 1 à 3, **caractérisé en ce que** le caoutchouc naturel présente, après la modification, un poids moléculaire supérieur ou égal à 1 000 000 g/mole.

5. Procédé selon l'une quelconque des revendications 1 à 4, **caractérisé en ce que** le déchiquetage du caoutchouc, selon la première étape de procédé, a lieu dans un broyeur à marteaux et/ou dans une déchiqueteuse.

6. Procédé selon l'une quelconque des revendications 1 à 5, **caractérisé en ce que** le caoutchouc naturel, selon la deuxième étape de procédé, est mélangé et nettoyé dans une cuve agitée à l'aide d'un liquide.

7. Procédé selon l'une quelconque des revendications 1 à 6, **caractérisé en ce que** le nouveau déchiquetage du caoutchouc, selon la troisième étape de procédé, a lieu dans un broyeur à marteaux et/ou dans une déchiqueteuse et/ou au moyen d'un rouleau.

8. Procédé selon l'une quelconque des revendications 1 à 7, **caractérisé en ce que** le séchage du caoutchouc, selon la quatrième étape de procédé, a lieu dans un milieu gazeux.

9. Caoutchouc modifié, **caractérisé en ce que** le caoutchouc naturel usuel du commerce est modifié par au moins quatre étapes de procédé mécaniques, où il s'agit, pour les étapes de procédé, au moins d'un déchiquetage du caoutchouc naturel comme première étape de procédé, d'un mélange et d'un nettoyage du caoutchouc naturel comme deuxième étape de procédé, d'un nouveau déchiquetage du caoutchouc naturel mélangé et nettoyé comme troisième étape de procédé et d'un séchage du caoutchouc naturel comme quatrième étape de procédé, le caoutchouc naturel ayant été préparé, avant la modification, par un procédé dans lequel les balles de coagulum obtenues à partir du latex sont transformées directement sans déchiquetage et se trouvant sous forme de feuilles.

10. Caoutchouc naturel modifié selon la revendication 9, **caractérisé en ce que** le caoutchouc naturel présente, avant la modification, un poids moléculaire supérieur ou égal à 1 000 000 g/mole.

11. Caoutchouc naturel modifié selon l'une quelconque des revendications 9 à 10, **caractérisé en ce que** le caoutchouc naturel présente, après la modification, un poids moléculaire supérieur ou égal à 1 000 000 g/mole.

12. Caoutchouc naturel modifié selon l'une quelconque des revendications 9 à 11, **caractérisé en ce que** dans le cadre du procédé de modification, il est déchiqueté selon la première étape dans un broyeur à marteaux et/ou dans une déchiqueteuse.

13. Caoutchouc naturel modifié selon l'une quelconque des revendications 9 à 12, **caractérisé en ce que** dans le cadre du procédé de modification, le caoutchouc naturel est mélangé et nettoyé selon la deuxième étape de procédé dans une cuve agitée à l'aide d'un liquide.

14. Caoutchouc naturel modifié selon l'une quelconque des revendications 9 à 13, **caractérisé en ce que** dans le cadre du procédé de modification, il est à nouveau déchiqueté selon la troisième étape de procédé dans un broyeur à marteaux et/ou dans une déchiqueteuse et/ou au moyen d'un rouleau.

15. Caoutchouc naturel modifié selon l'une quelconque des revendications 9 à 14, **caractérisé en ce que** dans le cadre du procédé de modification, le caoutchouc naturel est séché selon la quatrième étape de procédé dans un milieu gazeux.

16. Mélange de caoutchoucs, **caractérisé en ce qu'**il contient un caoutchouc naturel modifié selon la revendication 9 et contient les revendications qui s'y rapportent.

17. Utilisation d'un caoutchouc naturel modifié selon l'une quelconque des revendications 9 à 15 pour la production d'un pneu, d'une courroie ou d'une sangle.
